# EUROPEAN PATENT APPLICATION

(11) **EP 2 808 128 A1**
(43) Date of publication of application: **03.12.2014**
(21) Application number: 14168273.2
(22) Date of filing: 14.05.2014
(51) Int. Cl.: B25C 5/16, F16B 15/00, F16B 15/08

(54) **Metal staples stapler**

(30) Priority: 30.05.2013 IT TO20130438
(71) Applicant: Rovatti, Igino, 10146 Torino (IT)
(72) Inventor: Rovatti, Igino, 10146 Torino (IT)
(74) Representative: Vitillo, Giuseppe

(57) **Abstract**

Stapler with metal staples to apply staples with their longitudinal axis inclined by some angular degrees relative to the plane of the stapler, particularly useful to staple, despite its relatively small stapling depth, the sheets of a newspaper in their spine folding as well as, centrally, both open foolscap sheets arranged one on top of the other and sheets folded as an exercise book and to correctly but easily staple sheets arranged one on top of the other in their top left corner.

## Description

The present invention relates to a metal staples stapler.

In particular, the present invention relates to a stapler with metal staples that enables the application of staples on the top left corner of the documents to be stapled as well as the application of staples on the central vertical line of sheets arranged on top of one another and making up, for example, dossiers consisting of foolscap sheets of paper, exercise books, newspapers. The invention, in order to be better understood, will be explained using an example in which it is applied so as to facilitate the reading of a newspaper. This type of application, though, is numerically negligible compared to the applications that the invention will be subject to in the daily routine, where it will replace the use of current "plier" staplers in many occasions, especially in public offices and commercial offices of companies.

A newspaper is consulted and/or read while it is held by the hands of the reader or while it lies on a surface, such as a table, a desk, etc. In the first type of consulting and/or reading, the reader, in order to consult and/or read both the even pages and the odd pages on the inside of the newspaper, is forced to counter-fold the sheets, each comprising four pages, on their back. This counter-folding, in order to be performed in an acceptable manner and allow the reader to read all the pages on the inside of the newspaper, features a remarkable handling difficulty, as all readers know, especially when the reader is dealing with newspapers consisting of numerous sheets, and requires a great amount of time.

This discomfort will be reduced with this new type of stapler with metal staples, which, despite being similar to current staplers, differs from them due to its ability to enable the application of staples with an axis that is inclined, for example by forty-five angular degrees, relative to the axis of the stapler, thus allowing the sheets of the newspaper to be stapled on the supposed - since it is not printed - central line of the spine, despite the stapler being provided with a relatively small stapling depth consisting in the distance between the symmetrical closing groove of the staples and the striker of the sheets inserted into the relative compartment of the stapler.

The metal staples applied by this stapler are necessarily novel and are part of the invention.

An aspect of the present invention relates to a stapler for metal staples that uses sticks characterized by the features claimed in claim 1 and made up of the staples characterized by the features claimed in the same claim.

The features and advantages of the stapler according to the present invention will be best understood upon perusal of the following detailed description of at an embodiment with reference to the accompanying drawings, which schematically show what follows:
- figure 1 shows a perspective view of the stapler according to the present invention;
- figure 2 shows a newspaper to which metal staples can be applied by means of the stapler according to the present invention;
- figure 3 shows a detail of the page of the newspaper of figure 2;
- figure 4 shows a front view as well as a top view of the metal staple according to the present invention;
- figure 5 shows a front view as well as a top view of a traditional metal staple (ZENITH model);
- figures 6 and 7 show a comparison, in a perspective view, between a portion of a stick of metal staples according to the present invention (figure 6) and a portion of a stick of traditional metal staples (figure 7);
- figures 8 and 9 show a comparison, in a top view, between a portion of a stick of metal staples according to the present invention (figure 8) and a portion of a stick of traditional metal staples (figure 9);
- figure 10 shows a portion of a stick of metal staples with legs having a squared section, which is not easy to be manufactured;
- figure 11 shows a portion of a stick of metal staples, which is drawn so as to be compared with the stick portion of figure 10, but is not compatible withe the present invention;
- figure 12 shows a detail of the stick portion of figure 8;
- figure 13 shows a variant of the above-mentioned detail of the stick portion of figure 8;
- figure 14 shows the dispenser of the stapler according to the present invention;
- figure 15 shows, in a perspective view, the actuating lever of the stapler according to the present invention;
- figure 16 shows the cover of the stapler according to the present invention.

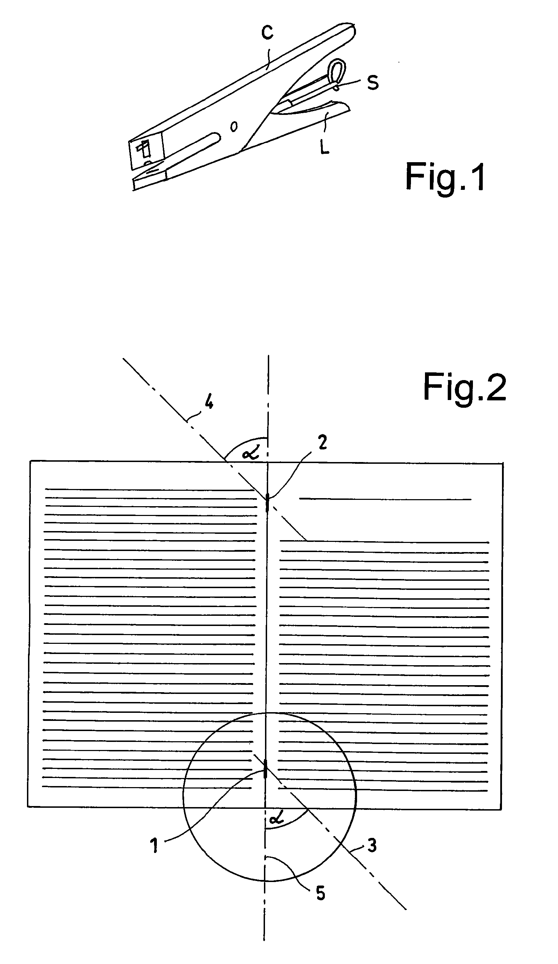

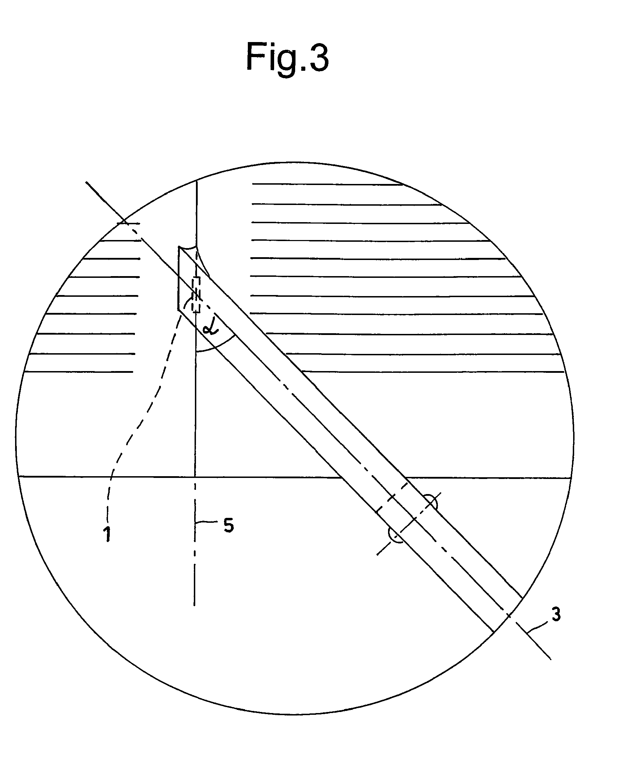

In figures 2 and 3, 1 and 2 are two metal staples applied with the new stapler and lines 3 and 4 are the axis of the stapler, namely the intersection of the plane of the stapler with the plane of the newspaper, while the stapler applies the staples onto the newspaper. Line 5 represents both the axis of the two staples and the supposed central spine line of the sheets arranged on top of one another forming the angle ά both with line 3 and line 4.

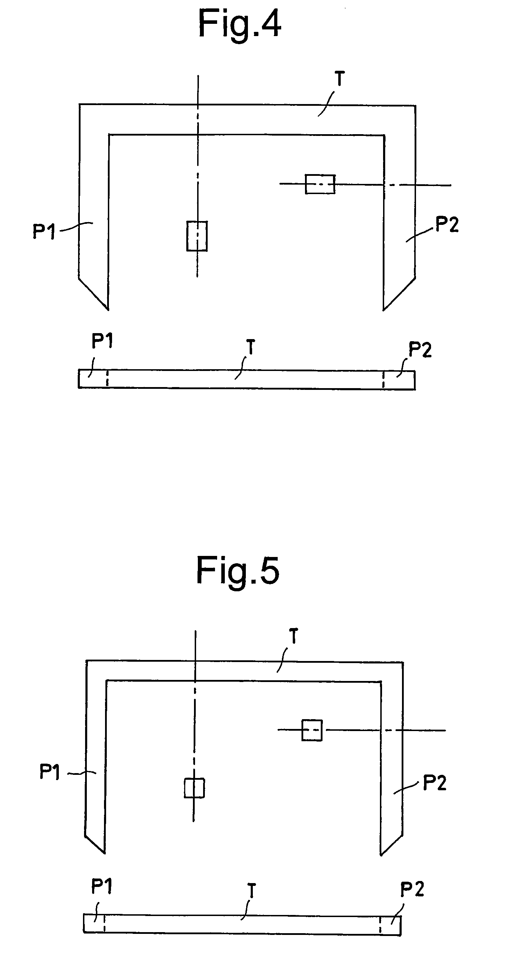

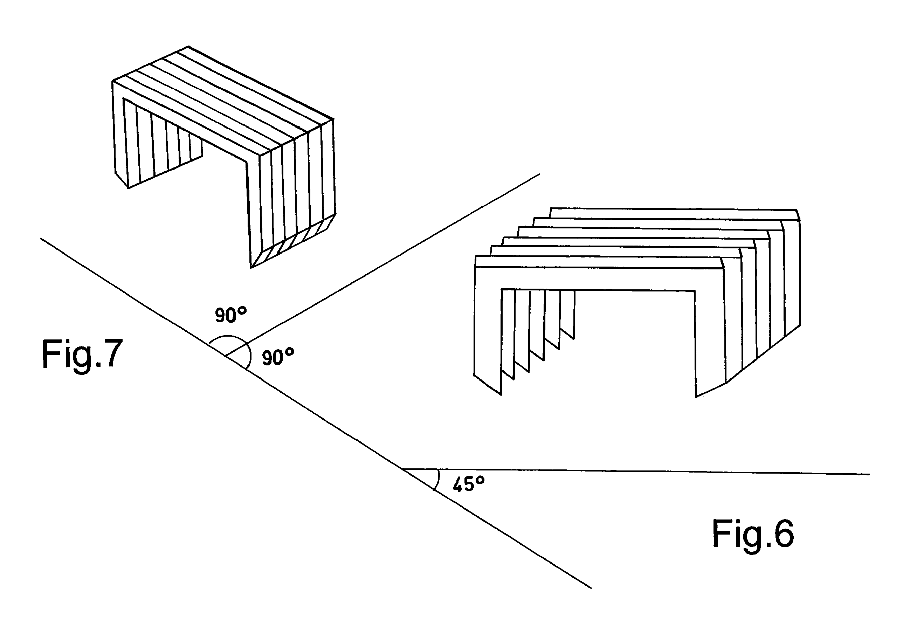

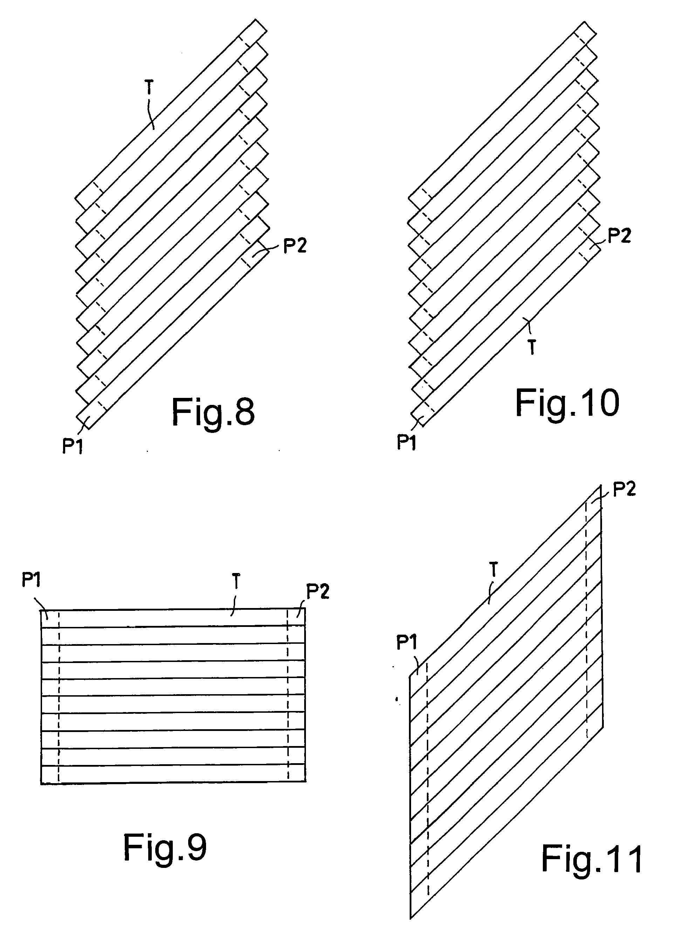

As known, the staples of the staplers currently available on the market, are laterally glued to the adjacent ones, so as to build a stick of metal staples. Similarly, the new type of stapler uses suitable metal staples that are laterally glued to the adjacent ones, so as to build a new type of staple stick. This new type of suitable metal staples is shown in figure 4, where a metal staple is drawn in front and top views together with the section of legs P1 and P2 and of crown T. Both sections have the shape of a rectangle, whose height has been chosen so as to be equal to one and a half times the base for the reasons that will be explained below. In order to permit a useful comparison, figure 5 shows a metal staple of the traditional type substantially having the same dimensions, namely width and height, as the new type, this traditional type being drawn in front and top views, as well, together with sections of the legs and of the crown. Both sections, though, unlike the sections of the new type of staples, have the shape of a square instead of the shape of a rectangle, with the size of the four sides being equal to the size of the base of the above-mentioned rectangle. A portion of a stick of angled metal staples for the new stapler is shown, in a perspective view, in figure 6 and, in order to allow a useful comparison, figure 7 shows, in a perspective view, a portion of a stick of traditional metal staples. The first stick portion is drawn in a top view in figure 8 and, similarly, the second stick portion is shown in figure 9. The metal staples of the stick portion of figure 8 and the metal staples of the stick portion of figure 9 have sections of the crown and of legs featuring the same width, as one can assume from figures 4 and 5, but a different height. The staples of the stick portion of figure 6 are glued to one another in a staggered manner, so that the plane on which each staple lies is inclined relative to the longitudinal axis of the stick. The section of crown T and of legs P1 and P2 of the staples of the stick portion of figure 6, as already mentioned above, is a rectangle having a height that is equal to one and a half times the width, as shown in figure 4.

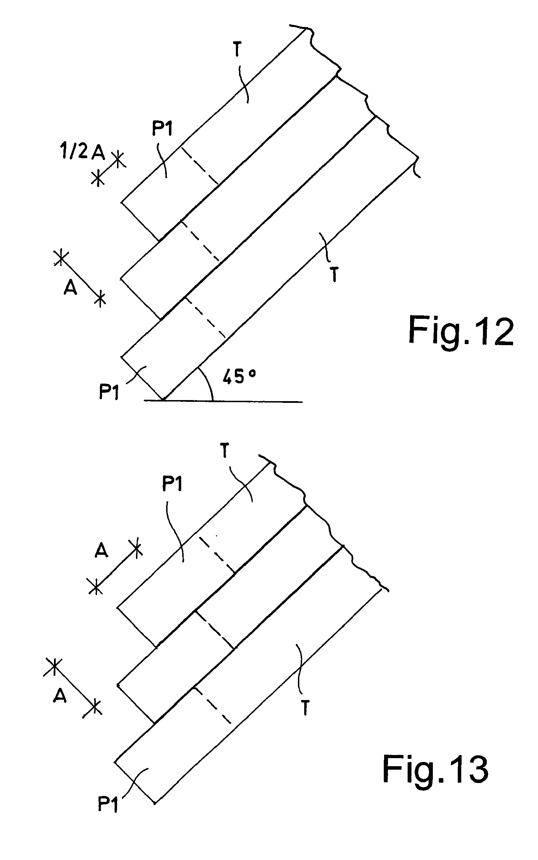

The reason for this difference, based on the drawings of figures 8, 9, and 10, is due to what follows. In the traditional type of sticks (figure 9), both legs of a staple are internally glued, on both their sides, to the legs of the adjacent staples. In the new type of oblique sticks (figure 8), in order to obtain a partial gluing between the legs of adjacent staples, the inventor has chosen legs having a section with the shape of a rectangle. As a matter of fact, if the legs had a section with a squared shape, it would be impossible for them to be glued to one another (figure 10). On the contrary, the choice of the shape of a rectangle having a height that is equal to one and a half times the base (figure 12) allows the legs of adjacent staples to be glued to one another along half their width, since the staples themselves are arranged at an angle of forty-five angular degrees.

It should be pointed out that the partial gluing between the legs of adjacent staples increases as said angle decreases and as the ratio between the height and the base of the rectangular section of the legs increases. A gluing between legs with said ratio equal to two units would be equal to the width of the legs, namely to the base of the rectangle of their section (figure 13). Given the same base of said rectangle, the increase of the ratio between the height and the base of the rectangle-shaped section of the legs involves, in the folding of the two legs of the metal staple, a work (force by displacement) increasing with the square of said ratio. The choice of one and a half units involves a doubling, absolutely negligible, of the force of the hand of the user during the portion of his/her movement that determines the folding of the legs of the metal staples in the relative groove. Another important observation arises when looking at the top view of the new type of oblique stick drawn in figure 8 and relates to the fact that, if the metal staple had a shape that, when glued to the others, builds a staple stick having the top view of figure 11, it would not be suitable for the use. As a matter of fact, this metal staple, pushed by the relative blade of stapler so as to close in a suitable symmetrical groove, would have the two legs subject not to a simple bending movement, with a consequent correct closing, but to a bending-twisting movement with a consequent defective closing.

In order to adopt metal staples having legs with a square-shaped section, the gluing between adjacent crowns needs to be so effective as to ensure to the stick the stiffness needed by it to be handled, without involving a manual difficulty of the operator when the staples are being applied. Another possibility to adopt said type of metal staples consists in applying, during the manufacturing procedure, under and/or on each stick, a suitable adhesive tape that joins the crowns of the staples and is adapted to allow the stick to be handled as well as to be cut by the blade of the stapler, without involving manual difficulties for the operator when the staple is being applied. The stapler according to the present invention, like the majority of the current staple models, consists of three main mechanical components that are the dispenser, the actuating lever, and the case.

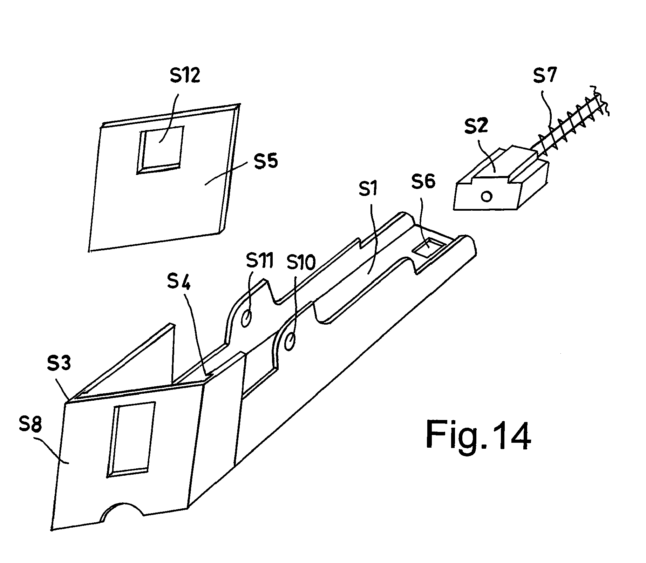

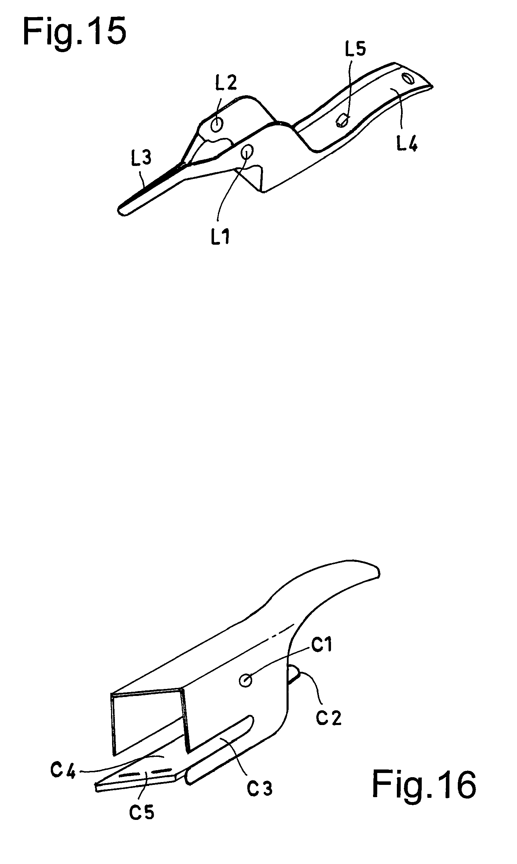

Dispenser S is shown in figure 14 in a perspective view. It is meant to hold the metal staples glued to one another so as to build the stick of staples shown in figure 6. One or more sticks can be accommodated in a channel S1 having a cross section with the shape of a rectangle and slightly larger than the similar cross section of the sticks, so that they can slide therein pushed by angled pusher S2. The angle of the pusher relative to the longitudinal axis of the dispenser is the same angle as the one of the staples of figure 6, selected, in a non-limiting manner, so as to be equal to forty-five angular degrees. The dispenser is provided, at one end, with a seat for pusher blade S5, said seat lying in the same angled plane as the staples of figure 6 relative to the axis of the dispenser. Said blade slides in grooves S3 and S4. Blade S5 pushes the metal staples so as to cause them to perforate the sheets and then close in a suitable symmetrical groove. The dispenser, at the other end, is provided with a hooking hole S6 for pusher S2, which is actuated by cylindrical spring S7 and always keeps the face of the stick of metal staples pressed against head S8 of the dispenser, both of them being arranged at an angle relative to the longitudinal axis of the dispenser, with a single metal staple precisely arranged under blade S5, which has angled sides and vertically slides in the seat that is laterally delimited by the two angled grooves S3 and S4. The dispenser is centrally provided with two holes S10 and S11, through which pin C1 of case C shown in figure 16 extends.

Actuating lever L is shown in figure 15 in a perspective view. It is centrally provided with two holes L1 and L2, through which pin C1 of cover C shown in figure 16 extends.

The actuating lever is shown in figure 15 in a perspective view. It is centrally provided with two holes L1 and L2, through which pin C1 of case C shown in figure 16 extends. The actuating lever, in the lower part L4, is generally shaped as the fingers of the hand of the operator and, above said lower part, it has hook L5, which is connected to a cylindrical pulling spring that is connected to hook C2 of the case of figure 16. Said actuating lever is always kept in an open position by said spring and, when it is activated and, thus, caused to rotate around said pin by means of its end L3 that has a rectangular shape and is inserted in the rectangular hole S12 of the blade, acts upon said blade. If the stapler is observed during its closing movement, it can be seen how the actuating lever, at first, due to the friction of the blade against its seat, brings head S8 of the dispenser close the sheets held together, thus compressing them, and then pushes the blade so as to cause it to move downwards in its seat in order to push the metal staple arranged underneath and cause it to perforate the sheets and then close in the relative symmetrical groove C5 of the case. The case is shown in figure 16 in a perspective view. It contains the front part of the dispenser described above, with all its components, and contains the front part of the actuating lever. It is centrally provided with pin C1, integral thereto, around which both the dispenser and the actuating lever rotate, the latter being always kept open by the relative cylindrical spring, as mentioned above. The case is provided with compartment C3, which is adapted to receive the sheets to be stapled and carries, on support C4 for the sheets, symmetrical groove C5, which is adapted to flex the legs of the metal staple so as to cause them to close. The angle of said groove C5 relative to the longitudinal axis of the dispenser is substantially the same as the one of the stick of staples of figure 6, of head S8 of the dispenser, and of the front part of pusher S2.

In order to describe and explain the present invention, which substantially relates to changes to be made to some components of the staplers currently available on the market, so that they can apply metal staples with their axis inclined by some angular degrees relative to the axis of the stapler and not at a right angle, as it normally happens with traditional staplers, we have chosen a stapler provided with a kinematic mechanism that is one of the simplest mechanisms currently available. This kinematic mechanism consists of a few components, among which there are, for example, a single pin a simple pusher. Many current models of staplers with metal staples are provided with kinematic mechanisms that are more complex than the one described and explained herein, which thus generally require more than one pin and more than one spring; some models also having a dispenser that can be loaded from the top. Obviously, the present invention is relative to all the models of staplers with metal staples that are currently being produced and will be designed in the future.

As mentioned above, the present invention, which can also be used to facilitate the reading of newspapers, allows sheets folded as an exercise book and open foolscap sheets to be stapled, but it mainly allows sheets to be joined and stapled by means of a metal staple that is very easily applied on their top left corner and has a direction that makes it easier for readers to consult the sheets without damaging them, contrary to the currently very frequent direction of the diagonal of the sheets between the top left corner and the bottom right corner. Therefore, this invention is very useful in offices, schools, and at home.

As known, there are two categories of manual staplers with metal staples: "plier" staplers and "table" staplers. Even though the present invention was described with reference to the "plier" stapler category, it can be applied to both categories.

## Claims

1. A stick of metal staples for a stapler, each staple consisting of a horizontal crown (T) and of two legs (P1, P2), which are arranged on the opposite sides of the crown, both the crown and the legs having a preferably rectangular section; the stick being **characterized in that** said metal staples, which make it up, are joined to one another and staggered in their length, so that the plane on which each staple lies is inclined by a few angular degrees with respect to the longitudinal axis of the stick, which is determined by its passage through the barycentric point of the crown of all the staples.

2. Stick of metal staples according to claim 1, wherein both the crown (T) and the legs (P1, P2) of each staple preferably have a section with the shape of a rectangle having the length equal to one and a half the width.

3. Stick of metal staples according to claim 1, wherein said inclination is of approximately forty-five angular degrees.

4. Stapler with metal staples according to claim 1 and comprising:
• a dispenser (S) comprising:
- a channel (S1), which houses at least one stick of metal staples and has a cross section that preferably has the shape of a rectangle and is slightly larger than the corresponding cross section of the sticks, so that they can slide therein when they are pushed by a pusher (S2);
- a head (S8) of the dispenser, the stick of metal staples always being kept pressed against said head (S8);
- a pusher blade (S5), which is arranged at an end of said dispenser and pushes the metal staples downwards so as to pierce the sheets of the object to be joined;
• an actuating lever (L), which, by means of said pusher blade (S5), pushes each single metal staple of the stick downwards;
• a case (C), which houses said dispenser and said actuating lever, provided with the compartment (C3) for receiving the sheets of the object to be joined and carries, on the support (C4), the symmetric groove (C5) for flexing the legs of the metal staple so as to cause them to close;
**characterized in that** the front surface of the pusher (S2), the head (S8) of the magazine, and the symmetrical groove (C5) of the case (C) are arranged at an angle with respect to the plane of the case with an angle that is equal to the angle of the metal staples of claim 1.

5. Stapler according to claim 4, wherein said angle is approximately of forty-five angular degrees.

6. Stapler according to claim 4, wherein said pusher blade (S5) slides in the grooves (S3, S4) of the dispenser.

7. Stapler according to claim 4, wherein said dispenser (S), at the other end, is provided with a hooking hole (S6) for the pusher (S2), which is actuated by the cylindrical spring (S7) and always keeps the stick of metal staples pressed against the head (S8) of said dispenser itself.

8. Stapler according to claim 4, wherein said case (C) is provided with the pin (C1), integral thereto, around which both the dispenser and the actuating lever rotate, said actuating lever always being kept open by an appropriate spring.

9. Stapler according to claim 8, wherein the case (C) is provided with the compartment (C3) for receiving the sheets to be joined and carries, on the support (C4) for the overlapping sheets, the symmetric groove (C5) adapted to flex the legs of the metal staple so as to cause them to close.

10. Stapler according to claim 4, wherein said lever (L) is provided with two holes (LI L2), through which the pin (C1) of the case extends.

11. Stapler according to claim 10, wherein said lever has a lower part (L4) with a shape resembling that of the fingers of the operator's hand and, on said lower part, a hook (L5), which is connected to a cylindrical pulling spring that is connected to the hook (C2) of the case; said actuating lever always being kept in an open position by said spring and, when it is activated, by rotating around said pin, it acts on said pusher blade by means of its end (L3) inserted into the rectangle (S12) of the pusher blade itself.

## Amended claims

### Amended claims in accordance with Rule 137(2) EPC.

**1.** A stick of metal staples for a stapler, each staple consisting of a horizontal crown (T) and of two legs (P1, P2), which are arranged on the opposite sides of the crown, both the crown and the legs having a preferably rectangular section; the stick being **characterized in that** said metal staples, which make it up, are joined to one another and staggered in their length, so that the plane on which each staple lies is inclined by a few angular degrees with respect to the longitudinal axis of the stick, which is determined by its passage through the barycentric point of the crown of all the staples.

**2.** Stick of metal staples according to claim 1, wherein both the crown (T) and the legs (P1, P2) of each staple preferably have a section with the shape of a rectangle having the length equal to one and a half the width.

**3.** Stick of metal staples according to claim 1, wherein said inclination is of approximately forty-five angular degrees.

**4.** Stapler with metal staples according to claim 1 and comprising:
• a dispenser (S) comprising:
- a channel (S1), which houses at least one stick of metal staples and has a cross section that preferably has the shape of a rectangle and is slightly larger than the corresponding cross section of the sticks, so that they can slide therein when they are pushed by a pusher (S2) ;
- a head (S8) of the dispenser, the stick of metal staples always being kept pressed against said head (S8);
- a pusher blade (S5), which is arranged at an end of said dispenser and pushes the metal staples downwards so as to pierce the sheets of the object to be joined;
• an actuating lever (L), which, by means of said pusher blade (S5), pushes each single metal staple of the stick downwards;
• a case (C), which houses said dispenser and said actuating lever, provided with the compartment (C3) for receiving the sheets of the object to be joined and carries, on the support (C4), the symmetric groove (C5) for flexing the legs of the metal staple so as to cause them to close;
**characterized in that** the front surface of the pusher (S2), the head (S8) of the magazine, and the symmetrical groove (C5) of the case (C) are arranged at an angle with respect to the plane of the case with an angle that is equal to the angle of the metal staples of claim 1.

**5.** Stapler according to claim 4, wherein said angle is approximately of forty-five angular degrees.

**6.** Stapler according to claim 4, wherein said pusher blade (S5) slides in the grooves (S3, S4) of the dispenser.

**7.** Stapler according to claim 4, wherein said dispenser (S), at the other end, is provided with a hooking hole (S6) for the pusher (S2), which is actuated by the cylindrical spring (S7) and always keeps the stick of metal staples pressed against the head (S8) of said dispenser itself.

**8.** Stapler according to claim 4, wherein said case (C) is provided with the pin (C1), integral thereto, around which both the dispenser and the actuating lever rotate, said actuating lever always being kept open by an appropriate spring.

**9.** Stapler according to claim 8, wherein the case (C) is provided with the compartment (C3) for receiving the sheets to be joined and carries, on the support (C4) for the overlapping sheets, the symmetric groove (C5) adapted to flex the legs of the metal staple so as to cause them to close.

**10.** Stapler according to claim 4, wherein said lever (L) is provided with two holes (LI, L2), through which the pin (C1) of the case extends.

**11.** Stapler according to claim 10, wherein said lever has a lower part (L4) with a shape resembling that of the fingers of the operator's hand and, on said lower part, a hook (L5), which is connected to a cylindrical pulling spring that is connected to the hook (C2) of the case; said actuating lever always being kept in an open position by said spring and, when it is activated, by rotating around said pin, it acts on said pusher blade by means of its end (L3) inserted into the rectangle (S12) of the pusher blade itself.
